# EUROPÄISCHE PATENTSCHRIFT

(11) **EP 2 036 421 B1**
(45) Veröffentlichungstag und Bekanntmachung des Hinweises auf die Patenterteilung: **15.09.2010**
(21) Anmeldenummer: 08012700.4
(22) Anmeldetag: 14.07.2008
(51) Int. Cl.: A01B 71/06

(54) **Vorrichtung zum Kuppeln einer Gelenkwelle mit einer Zapfwelle eines Traktors**
Device for coupling a jointed shaft with a p.t.o. shaft of a tractor
Dispositif de couplage d'un arbre de transmission avec la prise de force d'un tracteur

(30) Priorität: 11.09.2007 DE 102007043032
(43) Veröffentlichungstag der Anmeldung: 18.03.2009
(73) Patentinhaber: GKN Walterscheid GmbH, 53797 Lohmar (DE)
(72) Erfinder: Herchenbach, Paul, 53809 Ruppichteroth (DE); Sarfert, Andreas, 53225 Bonn (DE)
(74) Vertreter: Müller, Thomas Michael

(56) Entgegenhaltungen:
- EP-A- 1 932 411
- AT-B- 386 988
- FR-A- 2 619 986
- GB-A- 1 194 040

## Beschreibung

Die Erfindung betrifft eine Vorrichtung zum Kuppeln einer Gelenkwelle mit einer Zapfwelle eines Traktors umfassend erste Kuppelmittel, die drehfest an der Gelenkwelle angeordnet sind, zweite Kuppelmittel, die drehfest an der Zapfwelle des Traktors angeordnet sind und die zur Drehmomentübertragung drehfest mit den ersten Kuppelmitteln kuppelbar sind,
ein Kuppelschild zum Kuppeln der Kuppelmittel, an dem die ersten Kuppelmittel zumindest mittelbar drehgelagert sind und das Verriegelungsmittel mit Riegelflächen aufweist, und
eine Konsole, die am Heck des Traktors befestigbar ist und die mindestens eine Verriegelungseinrichtung mit Kipphebeln aufweist, wobei die Kipphebel zwischen einer Entriegelungsposition und einer Verriegelungsposition schwenkbar sind.

Eine solche Vorrichtung ist aus der EP 1 252 807 A1 bekannt, bei der erste Kuppelmittel drehfest mit der Gelenkwelle der Anbaumaschine verbunden und zweite Kuppelmittel drehfest mit der Zapfwelle eines Traktors verbunden sind. Beide Kuppelmittel sind zur Drehmomentübertragung kuppelbar. Traktorseitig ist eine nach oben hin offene Gabel an Kipphebeln schwenkbar angeordnet. Nachdem eine Bedienperson das Ende der Gelenkwelle von oben in die Gabel eingelegt hat, so daß die Gelenkwelle mittelbar über einen Lagerflansch in der Gabel abgestützt ist, wird die Gabel in Richtung Traktor verschwenkt. Hierüber wird die Gelenkwelle mit der Zapfwelle gekuppelt.

Die DE 33 02 379 C2 zeigt eine Vorrichtung, bei der an einem Tragarm, der verstellbar an einem landwirtschaftlichen Gerät befestigt ist, ein Halter vorgesehen ist, an dem ein Wälzlager befestigt ist. Über das Wälzlager ist eine Kupplungshülse drehgelagert, die mit einer Gelenkgabel eines Kreuzgelenks einer Gelenkwelle drehfest verbunden ist. Die Kupplungshülse ist mittels einer Längsverzahnung drehfest mit einer Kupplungsnabe verbindbar, wobei die Kupplungsnabe wiederum drehfest mit einer Zapfwelle eines Traktors verbunden ist. Die Kupplungshülse weist eine Innenumfangsnut auf, in die, in der gekuppelten Position, Sperrkugeln eingreifen, die durch einen Entriegelungsflansch radial nach außen in die Innenumfangsnut gedrückt werden und so ein unbeabsichtigtes Lösen der Kupplungshülse verhindern. Erst durch Verstellen des Entriegelungsflansches können die Sperrkugeln radial nach innen wandern, so dass die Kupplungshülse von der Kupplungsnabe abgewogen werden kann.

Zum Kuppeln wird der Traktor rückwärts an das Gerät herangefahren, bis die Kupplungshülse mit der Kupplungsnabe verbunden ist. Vorher muss jedoch der Tragarm genau auf die Höhe und die seitliche Position der Kupplungsnabe ausgerichtet werden, damit ein unmittelbares Kuppeln der Kupplungshülse auf die Kupplungsnabe ermöglicht wird.

Die EP 1 637 024 A1 zeigt einen Kuppelrahmen, der an einem Dreipunktgestänge eines Traktors befestigt wird. An dem Kuppelrahmen sind Kupplungshaken für eine Dreipunktkupplung eines Geräts vorgesehen. Ferner ist am Kuppelrahmen ein Kupplungselement drehbar und axial verschiebbar gelagert. Das Kupplungselement ist mit einer Gelenkwelle verbunden, die wiederum mit der Zapfwelle des Traktors verbunden ist. Sobald das Gerät an den Kuppelrahmen gekuppelt ist, befindet sich das Kupplungselement am Kuppelrahmen in einer zu einem Kupplungselement am Gerät zentrierten Position, da die Position gegenüber der Dreipunktkupplung beider Kupplungselemente identisch ist. Das Kupplungselement am Kuppelrahmen wird dann mittels eines Hebels manuell axial in Richtung zum Gerät verschoben, wobei die Kupplungselemente jeweils in Form einer Stimkupplung in Eingriff überführt werden.

EP 1 563 723 A1 zeigt eine Vorrichtung zum Kuppeln einer Gelenkwelle mit einer Zapfwelle eines Traktors, wobei am Traktor ein gabelförmiges Kupplungselement vorgesehen ist, das axial parallel zur Drehachse der Zapfwelle des Traktors verstellbar ist. In einer ausgefahrenen Position lässt sich ein Kupplungselement der Gelenkwelle radial zur Drehachse zwischen zwei Arme des gabelförmigen Kupplungselements einführen. Das Kupplungselement der Gelenkwelle ist rotationssymmetrisch zur Drehachse ausgebildet und weist eine Nut auf, in die das gabelförmige Kupplungselement eingreift. Nun lässt sich das gabelförmige Kupplungselement an die Zapfwelle axial heranziehen, wobei das Kupplungselement der Gelenkwelle ebenfalls axial verschoben wird. Durch das Heranziehen wird das Kupplungselement der Gelenkwelle auf die Zapfwelle gezogen, wobei durch eine Längsverzahnung eine drehfeste Verbindung zwischen der Zapfwelle und dem Kupplungselement der Gelenkwelle hergestellt wird.

Die FR 2 619 989 A1 und die AT 386 988 B zeigen Vorrichtungen zum Verbinden einer Gelenkwelle mit einer Eingangswelle eines Anbaugeräts. Der Kuppelvorgang besteht aus einer zweidimensionalen Bewegung, die durch eine hydraulisch betätigte Mechanik des Traktors erzeugt wird, nämlich zunächst einem vertikalen Anheben der Konsole und anschließend einem horizontalen Zusammenführen der beiden Kuppelmittel bis in die Einkuppelposition.

Aufgabe der vorliegenden Erfindung ist es, eine Vorrichtung zum Kuppeln einer Gelenkwelle mit einer Zapfwelle eines Traktors bereitzustellen, die ein einfaches und zuverlässiges Kuppeln gewährleistet und einen einfachen Aufbau aufweist.

Die Aufgabe wird erfindungsgemäß durch eine Vorrichtung zum Kuppeln einer Gelenkwelle mit einer Zapfwelle eines Traktors umfassend erste Kuppelmittel, die drehfest an der Gelenkwelle angeordnet sind, zweite Kuppelmittel, die drehfest an der Zapfwelle des Traktors angeordnet sind und die zur Drehmomentübertragung drehfest mit den ersten Kuppelmitteln kuppelbar sind,
ein Kuppelschild zum Kuppeln der Kuppelmittel, an dem die ersten Kuppelmittel zumindest mittelbar drehgelagert sind und das Verriegelungsmittel mit Riegelflächen aufweist, und
eine Konsole, die am Heck des Traktors befestigbar ist und die mindestens eine Verriegelungseinrichtung mit Kipphebeln aufweist, wobei die Kipphebel zwischen einer Entriegelungsposition und einer Verriegelungsposition schwenkbar sind,
wobei die Verriegelungsmittel und die Verriegelungseinrichtung derart zusammenwirkend gestaltet sind, dass durch Schwenken der Kipphebel von der Entriegelungsposition in die Verriegelungsposition die Kipphebel die Riegelflächen hintergreifen, um das Kuppelschild an die Konsole heranzuziehen und die ersten Kuppelmittel in eine Kuppelposition zum Kuppeln mit den zweiten Kuppelmitteln zu überführen, gelöst.

Zum Kuppeln wird der Traktor zunächst rückwärts an das Gerät herangefahren. Hierbei wird die Gelenkwelle noch nicht mit der Zapfwelle verbunden. Die Gelenkwelie muss nicht vorher exakt zur Zapfwelle ausgerichtet werden. Ferner muss der Fahrer nicht genau an das Gerät heranfahren, um die Gelenkwelle mit der Zapfwelle zu kuppeln. Das Kuppelschild wird zunächst in eine Ausgangsstellung bewegt, in der die Verriegelungseinrichtung die Verriegelungsmittel erfassen kann. Der eigentliche Kuppelvorgang findet durch Verstellen der Verriegelungseinrichtung statt, wobei die Verriegelungseinrichtung mit den Verriegelungsmitteln derart zusammenwirkt, dass das Kuppelschild an den Traktor herangezogen wird und die Gelenkwelle mit der Zapfwelle gekuppelt wird oder, wie später erläutert wird, in eine Position überführt wird, in der ein selbsttätiges Kuppeln der beiden Kuppelmittel erfolgen kann.

Die Verriegelungseinrichtung dient neben dem Heranziehen des Kuppelschildes auch zur Verriegelung der Kupplungsmittel zueinander, so dass ein unbeabsichtigtes Lösen vermieden wird.

Ein großer Vorteil besteht darin, dass keine aufwendigen Bauelemente, wie z. B. Kuppelrahmen, erforderlich sind. Ferner wird die Gelenkwelle in lediglich einer Richtung bewegt, wobei dies sowohl auf das Heranfahren des Traktors als auch auf den eigentlichen Kuppelvorgang der Gelenkwelle mit der Zapfwelle zutrifft. Eine weitere Kuppelrichtung quer zu den Drehachsen ist nicht erforderlich, so dass sich ein einfacher Kuppelvorgang ergibt.

Vorzugsweise sind die ersten Kuppelmittel durch ein erstes Kupplungselement dargestellt, das drehfest mit der Gelenkwelle verbindbar ist. Ferner sind die zweiten Kuppelmittel durch ein zweites Kupplungselement dargestellt, das drehfest mit der Zapfwelle des Traktors verbindbar ist. Somit sind zwei Kupplungselemente vorgesehen, die mit einer herkömmlichen Zapfwelle des Traktors und einer herkömmlichen Gelenkwelle verbunden werden können. Ebenso ist es jedoch auch denkbar, dass die ersten Kuppelmittel durch eine Gelenkgabel mit Kupplungshülse dargestellt sind, wobei die Kupplungshülse eine Bohrung mit einer Innenlängsverzahnung aufweist. Hierbei können die zweiten Kuppelmittel durch eine Außenlängsverzahnung der Zapfwelle dargestellt sein.

Die Verriegelungsmittel können durch Riegelflächen an dem Kuppelschild vorgesehen sein. Hierbei umfasst die Verriegelungseinrichtung vorzugsweise Kipphebel, die zwischen der Entriegelungsposition und der Verriegelungsposition schwenkbar sind und die Riegelflächen hintergreifen können. Durch das Hintergreifen der Riegelflächen lässt sich das Kuppelschild durch die Kipphebel erfassen und heranziehen.

Zum Betätigen der Kipphebel können ein oder mehrere Hydraulikzylinder vorgesehen sein. Die Kipphebel können miteinander starr verbunden sein, so dass diese zusammen gekippt werden. Hierbei kann ein Hydraulikzylinder zum Betätigen der Kipphebel ausreichend sein. Wenn die Kipphebel jedoch separat schwenkbar sind und nicht miteinander verbunden sind, kann es erforderlich sein, zwei Hydraulikzylinder vorzusehen.

Einfach aufgebaute Verriegelungsmittel werden dadurch bereitgestellt, dass diese zwei seitlich von dem Kuppelschild vorstehende Bolzen umfassen.

Um ein unbeabsichtigtes Entkuppeln zu vermeiden, kann vorgesehen sein, dass die Kipphebel in ihrer Verriegelungsposition mechanisch verriegelbar sind. Hierzu kann vorgesehen sein, dass an mindestens einem Kipphebel ein Haltearm vorgesehen ist, der zwischen einer Halteposition und einer Freigabeposition schwenkbar ist und in der Halteposition mit einer ersten Haltefläche den Kipphebel in seiner Verriegelungsposition hintergreift und in der Verriegelungsposition hält.

Um den Kuppelvorgang einfach und sicher zu gestalten, kann vorgesehen sein, dass das Kuppelschild erste Zentriermittel aufweist, die mit zweiten Zentriermitteln der Konsole beim Heranziehen des Kuppelschildes an die Konsole derart zusammenwirken, dass in herangezogener Position eine erste Drehachse der ersten Kuppelmittel mit einer zweiten Drehachse der zweiten Kuppelmittel zentriert ist. Die ersten Zentriermittel können erste Führungsflächen und die zweiten Zentriermittel zweite Führungsflächen umfassen.

Vorzugsweise sind die ersten Führungsflächen durch Bereiche einer Außenumfangsfläche des Kuppelschildes und die zweiten Führungsflächen durch axial von der Konsole vorstehende Führungsarme gebildet.

In konkreter Ausgestaltung kann vorgesehen sein, dass vier sich jeweils paarweise gegenüberstehende Führungsarme vorgesehen sind, die um die zweite Drehachse verteilt angeordnet sind und dass der Abstand im rechten Winkel zur zweiten Drehachse zwischen den zweiten Führungsflächen zweier gegenüberstehender Führungsarme in Richtung zu freien Enden der Führungsarme zunimmt.

Die Führungsarme und die Führungsflächen bilden vorzugsweise eine Grobzentrierung des Kuppelschildes gegenüber der Konsole. Somit wird beim Heranfahren des Traktors oder beim Heranziehen des Kuppelschildes zunächst das Kuppelschild zwischen den Führungsarmen eingefädelt und grob zur zweiten Drehachse zentriert.

Zur Feinzentrierung kann vorgesehen sein, dass die ersten Zentriermittel eine zentrisch zur ersten Drehachse angeordnete erste Zentrierfläche und die zweiten Zentriermittel eine zentrisch zur zweiten Drehachse angeordnete zweite Zentrierfläche aufweisen, wobei eine der Zentrierflächen als Außenumfangsfläche und die andere der Zentrierflächen als Innenumfangsfläche ausgebildet ist und wobei zumindest eine der Zentrierflächen konusförmig gestaltet ist.

In einer bevorzugten Ausgestaltung kann die erste Zentrierfläche durch eine Außenfläche der ersten Kuppelmittel und die zweite Zentrierfläche durch eine konusförmige Innenfläche einer Zentrierhülse an den zweiten Kuppelmitteln gebildet sein.

Somit ist beim weiteren Kuppelvorgang, der in der Regel durch das Heranziehen des Kuppelschildes mittels der Verriegelungseinrichtung stattfindet, eine Feinzentrierung gegeben.

Bei der vorgeschlagenen Zentrierung findet somit zunächst beim Heranfahren des Traktors an das Gerät oder durch das Heranziehen des Kuppelschildes eine Grobzentrierung gegenüber den feststehenden Bauteilen, nämlich dem Kuppelschild und der Konsole, statt. Beim Heranziehen des Kuppelschildes an die Konsole mittels der Verriegelungselemente findet daraufhin die Feinzentrierung gegenüber drehenden Bauteilen statt. Hierzu sind die Zentrierflächen an den Kuppelmitteln vorgesehen.

Vorzugsweise sind die ersten Kuppelmittel mit einem Gelenkteil eines Gelenks der Gelenkwelle verbunden, wobei die ersten Kuppelmittel an dem Kuppelschild drehgelagert sind.

Die Gelenkwelle ist vorzugsweise eine Kreuzgelenkwelle, wobei die Gelenkgabel des Kreuzgelenks mittelbar über die ersten Kuppelmittel an dem Kuppelschild gelagert ist.

Vorzugsweise ist vorgesehen, dass die ersten Kuppelmittel axial vorstehende erste Mitnehmerklauen und die zweiten Kuppelmittel axial vorstehende zweite Mitnehmerklauen aufweisen, und dass die Mitnehmerklauen in einem gekuppelten Zustand der beiden Kuppelmittel jeweils in Lücken zwischen den Mitnehmerklauen des anderen Kupplungselements eingreifen.

Einfache Kuppelmittel werden dadurch bereitgestellt, dass eines der Kuppelmittel axial zwischen einer in Richtung zu den anderen Kuppelmitteln vorgeschobenen und einer zurückgeschobenen Stellung verschiebbar ist und dass Federmittel vorgesehen sind, die die axial verschiebbaren Kuppelmittel in Richtung zur vorgeschobenen Stellung mit Kraft beaufschlagen.

Hierbei kann vorgesehen sein, dass die zweiten Kuppelmittel gegenüber der Zapfwelle axial verschiebbar geführt sind.

In der Kuppelposition der ersten Kuppelmittel sind daher zwei Stellungen der beiden Kuppelmittel zueinander möglich. Entweder greifen die Klauen der ersten Kuppelmittel unmittelbar nach dem Überführen der ersten Kuppelmittel in die Kuppelposition in Lücken zwischen den Mitnehmerklauen der zweiten Kuppelmittel, so dass unmittelbar eine drehfeste Verbindung hergestellt ist. Oder die Mitnehmerklauen stoßen stirnseitig aneinander und greifen nicht ineinander ein, wenn sich die Kuppelmittel in anderen Drehpositionen zueinander befinden. Im letzteren Fall wird eines der Kuppelmittel axial verschoben. Sobald nun die Zapfwelle in Drehbewegung versetzt wird, werden die einen Kuppelmittel zu den anderen Kuppelmitteln verdreht, so dass dann die Mitnehmerklauen der beiden Kuppelmittel ineinander greifen können.

Vorzugsweise ist hierbei vorgesehen, dass die zweiten Kuppelmittel gegenüber der Zapfwelle axial verschiebbar geführt sind.

Ein bevorzugtes Ausführungsbeispiel wird im folgenden anhand der Zeichnungen näher erläutert. Hierin zeigen
- Figur 1: eine perspektivische Darstellung einer erfindungsgemäßen Vorrichtung in einer Entriegelungsposition, in der keine Gelenkwelle mit der Zapfwelle verbunden ist;
- Figur 2: eine perspektivische Darstellung der Vorrichtung gemäß Fig. 1 in einer Verriegelungsposition mit Kuppelschild;
- Figur 3: eine vergrößerte perspektivische Darstellung gemäß Fig. 2 ohne Kuppelschild;
- Figur 4: eine Seitenansicht der Kipphebel einschließlich deren Betätigungselemente;
- Figur 5: einen Längsschnitt durch das zweite Kupplungselemente auf der Zapfwelle und
- Figur 6: einen Längsschnitt durch das erste und das zweite Kupplungselemente und
- Figur 7: eine perspektivische Darstellung des Kuppelschilds mit erstem Kupplungselement.

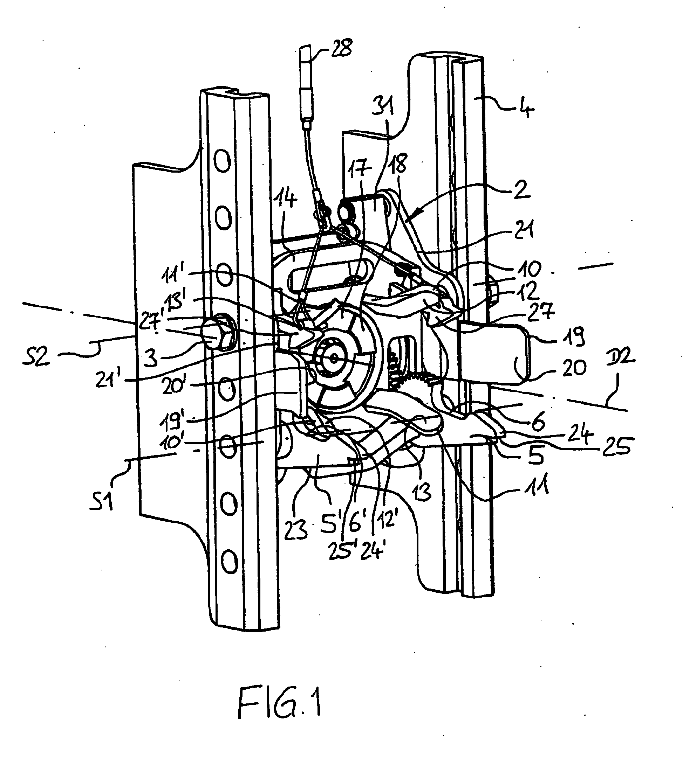

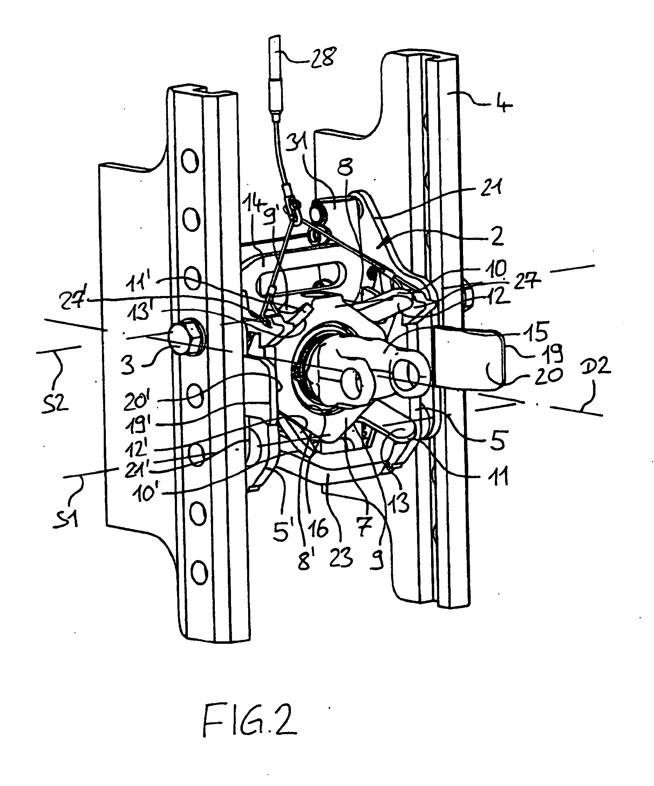

Die Figuren 1 und 2 zeigen perspektivische Darstellungen einer erfindungsgemäßen Vorrichtung am Heck eines Traktors.

In Figur 1 ist die Zapfwelle 1 des Traktors dargestellt, die um eine zweite Drehachse D2 drehbar ist. An einem Befestigungsbock 4, der am Heck des Traktors vorgesehen ist und Bestandteil des Traktors ist, ist eine Konsole 2 mit Befestigungsschrauben 3 befestigt. Die Konsole 2 trägt zwei Kipphebel 5, 5', die um eine erste Schwenkachse S1 zwischen einer in Figur 1 dargestellten Entriegelungsposition und einer in Figur 2 dargestellten Verriegelungsposition schwenkbar sind. Die Kipphebel 5, 5' weisen jeweils ein Fangprofil 6, 6' auf, mit dem hier nicht dargestellte und später erläuterte Riegelflächen an einem Kuppelschild 7 zusammenwirken. Die Kipphebel 5, 5' sind Bestandteil einer Verriegelungseinrichtung an der Konsole 2. Das Kuppelschild 7 weist Verriegelungsmittel in Form von seitlich vorstehenden Bolzen auf, die die Riegelflächen bilden. Beim Verschwenken der Kipphebel 5, 5' aus der Entriegelungsposition in die Verriegelungsposition hintergreifen die Fangprofile 6, 6' die Bolzen am Kuppelschild 7 und ziehen dieses an die Konsole 2 heran, um, wie später noch erläutert wird, die Gelenkwelle mit der Zapfwelle 1 zu kuppeln.

Das Kuppelschild 7 weist eine zentrale Bohrung 16 auf, in der eine Gelenkgabel 15 eines Kreuzgelenks einer Gelenkwelle (hier nicht vollständig dargestellt) drehgelagert ist. Beim Heranbewegen des Kuppelschildes 7 an die Konsole 2 muss zunächst eine grobe Vorzentrierung stattfinden, um ein einwandfreies Kuppeln zu gewährleisten. Hierzu dienen zunächst Führungsbleche 19, 19', die an Seitenplatten 21, 21' der Konsole 2 nach hinten vorstehend angeordnet sind. Die Führungsbleche 19, 19' weisen Führungsflächen 20, 20' auf, die sich gegenüber liegen. Ausgehend von den Seitenplatten 21, 21' entfernen sich die Führungsbleche 19, 19' in Richtung zum Gerät hin. Somit kann zunächst eine seitliche Grobzentrierung des Kuppelschildes 7 stattfinden, indem die seitlich vorstehenden Bolzen entlang der Führungsflächen 20, 20' der Führungsbleche 19, 19' geführt und zentriert werden.

Ferner sind an einer Basisplatte 14, die in einem rechten Winkel zur zweiten Drehachse D2 der Zapfwelle 1 angeordnet und Bestandteil der Konsole 2 ist, Führungsarme 10, 10', 11, 11' vorgesehen, die von der Basisplatte 14 nach hinten in Richtung zum Gerät vorstehen. Die Führungsarme 10,10', 11, 11' bilden jeweils eine zweite Führungsfläche 12, 12', 13, 13'. Die Führungsarme 10, 10', 11, 11' sind um die zweite Drehachse D2 verteilt angeordnet und stehen sich paarweise gegenüber, wobei die zweiten Führungsflächen 12, 12', 13, 13' paarweise gegenüber liegend angeordnet sind. Der Abstand im rechten Winkel zur zweiten Drehachse D2 zwischen den zweiten Führungsflächen 12, 12', 13, 13' nimmt in Richtung zu den feinen Enden der Führungsarme 10, 10', 11, 11' zu.

Das Kuppelschild 7 weist an einer Außenumfangsfläche erste Führungsflächen 8, 8', 9, 9' auf, die paarweise entgegengesetzt zueinander angeordnet sind. Beim Heranziehen des Kuppelschildes 7 oder beim Heranfahren des Traktors an das Gerät kommen die ersten Führungsflächen 8, 8', 9, 9' jeweils mit einer der zweiten Führungsflächen 12, 12', 13, 13' in Anlage, wobei eine Grobzentrierung des Kuppelschildes 7 stattfindet.

Wie in Figur 1 erkennbar ist, umfasst die Vorrichtung ferner zweite Kupplungsmittel in Form eines zweiten Kupplungselements 17, welches zweite Mitnehmerklauen 18 aufweist, die stirnseitig in Richtung der zweiten Drehachse D2 vorstehen und zwischen denen Lücken gebildet sind. Das zweite Kupplungselement 17 ist mit ersten Kuppelmitteln in Form eines ersten Kupplungselements, welches später näher erläutert wird und entsprechend dem zweiten Kupplungselement 17 ausgebildet ist, kuppelbar. In der in Figur 2 dargestellten Verriegelungsposition greifen die Mitnehmerklauen beider Kupplungselemente ineinander, so dass zwischen ihnen eine drehfeste Verbindung gegeben ist. Das erste Kupplungselement ist hierbei drehbar mit der Gelenkgabel 15 verbunden. Das zweite Kupplungselement 17 ist über eine Bohrung 22 mit Längsverzahnungen auf der Zapfwelle 1, welche ebenfalls eine Längsverzahnung aufweist, drehfest gehalten.

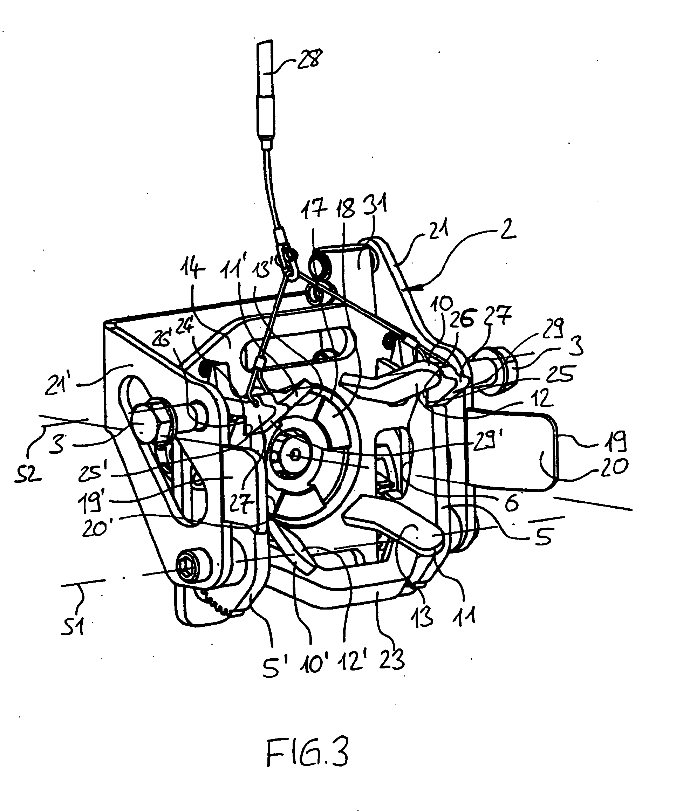

Figur 3 zeigt eine vergrößerte Ansicht der Vorrichtung ohne Kuppelschild, wobei sich die Kipphebel 5, 5' in der Verriegelungsposition befinden. Die beiden Kipphebel 5, 5'sind über eine Brücke 23 miteinander verbunden, so dass diese zusammen verschwenkt werden. Somit ist ein einziges Antriebsaggregat, z.B. ein Hydraulikzylinder, ausreichend, um beide Kipphebel 5, 5' zu verschwenken. Im vorliegenden Fall wird ein doppelwirkender Hydraulikzylinder eingesetzt, wie dies später noch näher erläutert wird. Grundsätzlich ist es jedoch auch möglich, dass die beiden Kipphebel 5, 5' nicht miteinander verbunden sind. Sie können dann gemeinsam über ein gemeinsames Betätigungselement mittels eines einzigen Antriebsaggregats oder mit zwei separaten Antriebsaggregaten verschwenkt werden.

Die Kipphebel 5, 5' sind um die erste Schwenkachse S1 verschwenkbar. An ihren freien Enden 24, 24' sind zweite Halteflächen 25, 25' vorgesehen, die in der Verriegelungsposition nach hinten gerichtete sind. An der Konsole 2 sind zwei Haltearme 27, 27' vorgesehen, die jeweils eine erste Haltefläche 26, 26' bilden, gegen die die Kipphebel 5, 5' mit ihren zweiten Halteflächen 25, 25' in der Verriegelungsposition abgestützt sind. Die Kipphebel 5, 5' sind somit gegen ein Überführen in die Entriegelungsposition gehindert.

Die Haltearme 27, 27' lassen sich mittels eines Bowdenzugs 28 aus der oben beschriebenen Halteposition um eine zweite Schwenkachse S2 in eine Freigabeposition überführen, in der die Kipphebel 5, 5' freigegeben sind, so dass diese aus der in Figur 3 dargestellten Verriegelungsposition in ihre in Figur 1 dargestellte Entriegelungsposition überführbar sind. Anstelle eines Bowdenzugs sind auch andere Betätigungen denkbar, wie z.B. pneumatische oder elektro-mechanische Bauteile.

Der Vorteil dieser mechanischen Verriegelung der Kipphebel 5, 5' besteht darin, dass bei einer hydraulischen Ansteuerung der Kipphebel 5, 5' in der Verriegelungsposition kein Hydraulikdruck mehr auf den antreibenden Hydraulikzylinder gegeben werden muss. Vielmehr sind die Kipphebel 5, 5' durch die mechanische Verriegelung in der Verriegelungsposition gehalten. Dies führt auch dazu, dass selbst bei einem Druckabfall im Hydrauliksystem die Gelenkwelle weiterhin sicher gekuppelt bleibt.

Grundsätzlich wäre es in der vorliegenden Konstellation mit Brücke 23, die die beiden Kipphebel 5, 5' miteinander verbindet, ausreichend, wenn ein Haltearm 27, 27' vorgesehen ist.

Beim Überführen der Kipphebel 5, 5' aus ihrer Entriegelungsposition in ihre Verriegelungsposition müssen die Haltearme 27, 27' nicht extern betätigt werden, um aus der Halteposition in die Freigabeposition überführt zu werden. Hierzu ist vielmehr je Haltearm 27, 27' eine Betätigungsfläche 29, 29' vorgesehen, gegen die die freien Enden 24, 24' der Kipphebel 5, 5' anlaufen und die Haltearme 27, 27' aus ihrer Halteposition in die Freigabeposition überführen, bis die Haltearme 27, 27' die Kipphebel 5, 5' mit ihren ersten Halteflächen 26, 26' hintergreifen und selbsttätig in die Halteposition überführt werden. Hierzu sind Federelemente 30 vorgesehen, die die Haltearme 27, 27' zur Einnahme ihrer Halteposition mit Kraft beaufschlagen.

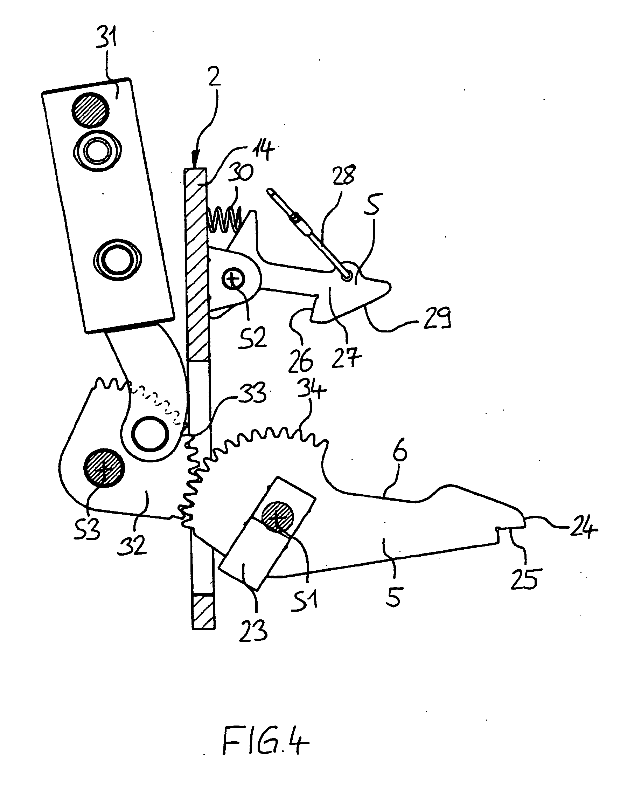

Figur 4 zeigt, wie die Kipphebel 5, 5' betätigt werden. Ein Hydraulikzylinder 31 ist kolbenseitig an der Konsole 2 schwenkbar befestigt und kolbenstangenseitig schwenkbar an einem Betätigungselement 32 befestigt. Das Betätigungselement 32 ist wiederum um eine dritte Schwenkachse S3 schwenkbar an der Konsole 2 befestigt, wobei der Hydraulikzylinder 31 exzentrisch zur dritten Schwenkachse S3 am Betätigungselement 32 befestigt ist. Das Betätigungselement 32 weist einen ersten Verzahnungsabschnitt 33 auf, der koaxial zur dritten Schwenkachse S3 angeordnet ist. Der erste Verzahnungsabschnitt 33 kämmt mit einem zweiten Verzahnungsabschnitt 34 eines der Kipphebel 5, wobei der zweite Verzahnungsabschnitt 34 koaxial zur ersten Schwenkachse S1 angeordnet ist. Durch Verstellen des Hydraulikzylinders 31 wird somit das Betätigungselement 32 um die dritte Schwenkachse S3 geschwenkt, wobei aufgrund des Verzahnungseingriffes der beiden Verzahnungsabschnitte 33, 34 der Kipphebel 5 geschwenkt wird. Der Kipphebel 5 ist, wie bereits erläutert, über die Brücke 23 mit dem anderen Kipphebel 5' verbunden, so dass beide Kipphebel 5, 5' synchron zueinander bewegt werden. Sofern keine Brücke 23 vorgesehen ist, muss ein weiteres Betätigungselement vorgesehen sein, welches den anderen Kipphebel 5, 5' betätigt, wobei entweder die beiden dann vorgesehenen Betätigungselemente drehfest miteinander verbunden sind oder ein weiterer Hydraulikzylinder erforderlich ist.

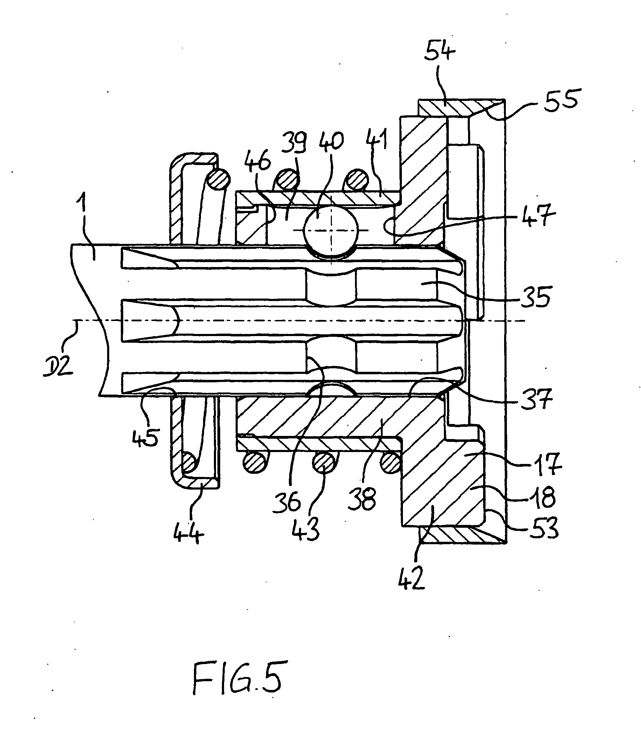

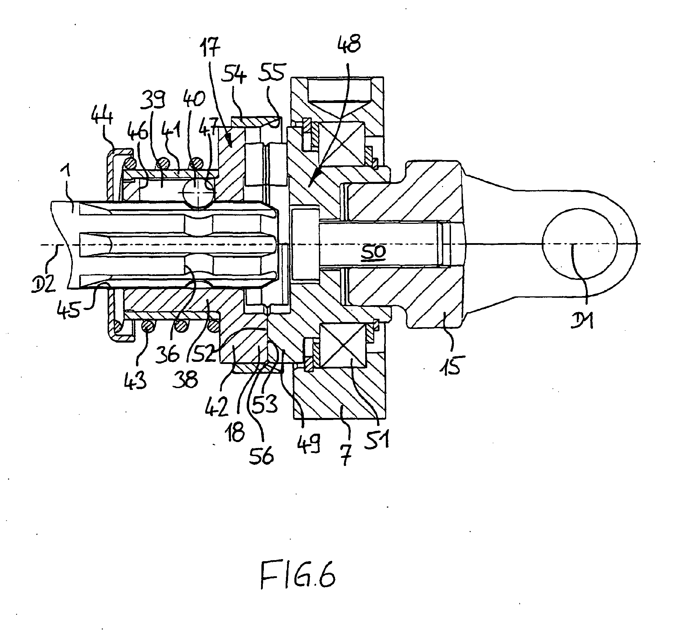

Die Figuren 5 und 6 zeigen die Kuppelmittel im Detail, anhand derer der Kuppelvorgang im folgenden näher erläutert werden soll.

Figur 5 zeigt die Zapfwelle 1, welche eine Längsverzahnung 35 aufweist. In der Längsverzahnung 35 ist eine umlaufende Nut 36 koaxial zur zweiten Drehachse D2 vorgesehen. Auf die Zapfwelle 1 ist das zweite Kupplungsteil 17 mit einer Nabe 38 aufgeschoben. Hierzu weist die Nabe 38 eine zentrale Bohrung 37 auf, welche eine entsprechend zur Längsverzahnung 35 der Zapfwelle 1 ausgebildete Längsverzahnung aufweist.

Die Nabe 38 des zweiten Kupplungselements 17 weist ein Langloch 39 auf, welches parallel zur zweiten Drehachse D2 verläuft und axial begrenzt ist. Das Langloch ist radial als durchgehender Durchbruch ausgebildet. In dem Langloch 39 sitzt eine Arretierkugel 40, welche in die Nut 36 der Zapfwelle 1 eingreift. Koaxial um die Nabe 38 ist eine Hülse 41 vorgesehen, welche die Arretierkugel 40 in der Nut 36 hält. Die Hülse 41 ist auf der Nabe 38 verdrehbar gehalten und weist über den Umfang einen Durchbruch auf, so dass die Hülse 41 derart verdreht werden kann, dass der Durchbruch mit dem Langloch 39 fluchtet und die Kugel aus der Nut 36 radial austreten kann. Somit lässt sich das zweite Kupplungselement 17 vom Wellenzapfen 1 entfernen. Das zweite Kupplungselement 17 bildet ferner einen Mitnehmerabschnitt 42 in Form eines Flansches, welcher die axial vorstehenden Mitnehmerklauen 18 aufweist. Das zweite Kupplungselement 17 ist in Richtung einer ausgeschobenen Position mittels einer Feder 43 beaufschlagt. Die Feder 43 stützt sich einerseits gegen den Mitnehmerabschnitt 42 des zweiten Kupplungselements 17 und andererseits gegen eine Halteplatte 44 ab. Die Halteplatte 44 weist eine zentrale Bohrung 45 auf, welche ein entsprechend der Längsverzahnung 35 der Zapfwelle 1 aufweisenden Querschnitt bildet. Somit ist die Halteplatte 44 drehsicher gehalten und stützt sich gegen das Ende der Längsverzahnung 35 ab und bietet somit einen axialen Anschlag für die Feder 43.

In Figur 5 ist das zweite Kupplungselement 17 in einer Zwischenposition dargestellt. In einer hier nicht dargestellten vollständig ausgeschobenen Position stützt sich das zweite Kupplungselement 17 mit einem ersten Anschlag 46, der durch das Langloch 39 gebildet ist, gegen die in der Nut 36 gehaltene Arretierkugel 40 ab. In einer vollständig eingeschobenen Position, wie in Figur 6 dargestellt, stützt sich das zweite Kupplungselement 17 mit einem zweiten Anschlag 47, welcher durch das Langloch 39 gebildet ist, gegen die Arretierkugel 40 ab. Somit sind vordefinierte Positionen des zweiten Kupplungselements 17 realisiert.

Figur 6 zeigt das zweite Kupplungselement 17 sowie das Kuppelschild 7 zusammen mit dem ersten Kupplungselement 48. Das erste Kupplungselement 48 weist zu dem zweiten Kupplungselement 17 gerichtete erste Mitnehmerklauen 49 auf. Das erste Kupplungselement 48 ist über eine Befestigungsschraube 50 mit der Gabel 15 einer hier nicht dargestellten Gelenkwelle verbunden. Über ein Wälzlager 51 ist das erste Kupplungselement 48 und damit mittelbar auch die Gelenkgabel 15 im Kuppelschild 7 drehbar gelagert.

In der dargestellten Position stoßen die ersten Mitnehmerklauen 49 mit ersten Stirnflächen 52 gegen zweite Stirnflächen 53 der zweiten Mitnehmerklauen 18. In dieser Position ist das zweite Kupplungselement 17 in eine eingeschobenen Position überführt, in der das zweite Kupplungselement 17 sich mit dem zweiten Anschlag 47 gegen die Arretierkugel 40 abstützt. Durch Drehung der Zapfwelle 1 und damit Drehung des zweiten Kupplungselements 17 gegenüber dem ersten Kupplungselement 48 gelangen die ersten Mitnehmerklauen 18 in eine Position, in der sie mit Lücken zwischen den ersten Mitnehmerklauen fluchten, so dass das erste Kupplungselement 17 mit dem zweiten Kupplungselement 48 gekuppelt wird, in dem das zweite Kupplungselement 17 in eine Zwischenposition axial ausrückt und die ersten Mitnehmerklauen 49 mit den zweiten Mitnehmerklauen 18 in Eingriff gelangen.

Nach der oben beschriebenen Grobzentrierung findet eine Feinzentrierung statt. Hierzu weist das erste Kupplungselement eine erste Zentrierfläche 56 auf, die an einer Außenumfangsfläche des ersten Kupplungselements 48 vorgesehen ist. Das zweite Kupplungselement 17 weist eine zweite Zentrierfläche 55 in Form einer konusförmigen Innenfläche auf, die durch eine Zentrierhülse 54 gebildet ist. Die Zentrierhülse sitzt außen auf dem Mitnehmerabschnitt 42 des zweiten Kupplungselements 17. Beim Überführen des ersten Kupplungselements 48 in die in Figur 6 dargestellte Position fädelt somit das erste Kupplungselement 48 mit der ersten Zentrierfläche 46 in die Zentrierhülse 54 ein und wird durch die zweite Zentrierfläche 55 in Form einer konusförmigen Innenfläche zentriert.

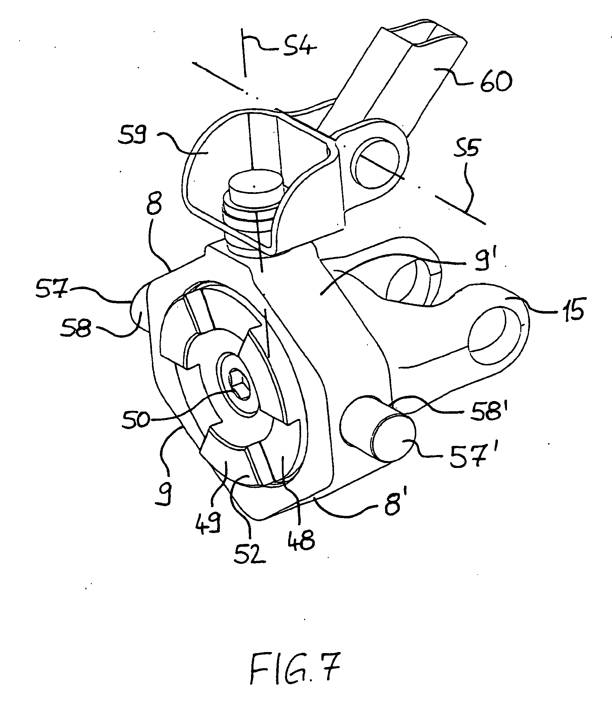

Figur 7 zeigt eine perspektivische Darstellung des Kuppelschilds 7. An dem Kuppelschild sind seitlich zwei vorstehende Bolzen 57 vorgesehen, welche mit ihrer Außenumfangsfläche jeweils eine Riegelfläche 58 bilden. Die Bolzen 57 werden von den Kipphebeln gemäß der Figuren 1 bis 3 erfasst und an die Konsole herangezogen.

Das Kuppelschild 7 ist schwenkbar an einem Schwenklager 59 befestigt. Das Kuppelschild lässt sich um eine vertikale Schwenkachse S4 relativ zum Schwenklager 59 schwenken. Das Schwenklager 59 ist wiederum an einem Haltearm 60 um eine horizontale Schwenkachse S5 schwenkbar, wobei der Haltearm 60 an einem landwirtschaftlichen Gerät befestigt ist. Das Kuppelschild 7 ist frei zum Gerät verstellbar und kann somit für einen erfolgreichen Kuppelvorgang grob vorjustiert werden.

### Bezugszeichenliste

- 1: Zapfwelle
- 2: Konsole
- 3: Befestigungsschraube
- 4: Befestigungsbock
- 5, 5': Kipphebel
- 6, 6': Fangprofil
- 7: Kuppelschild
- 8, 8': erste Führungsfläche
- 9, 9': erste Führungsfläche
- 10, 10': Führungsarm
- 11, 11': Führungsarm
- 12, 12': zweite Führungsfläche
- 13, 13': zweite Führungsfläche
- 14: Basisplatte
- 15: Gelenkgabel
- 16: Bohrung
- 17: zweites Kupplungselement
- 18: zweite Mitnehmerklauen
- 19, 19': Führungsblech
- 20, 20': Führungsfläche
- 21, 21': Seitenplatten
- 22: Bohrung
- 23: Brücke
- 24, 24': freies Ende
- 25, 25': zweite Haltefläche
- 26, 26': erste Haltefläche
- 27, 27': Haltearm
- 28: Bowdenzug
- 29, 29': Betätigungsfläche
- 30: Federelement
- 31: Hydraulikzylinder
- 32: Betätigungselement
- 33: erster Verzahnungsabschnitt
- 34: zweiter Verzahnungsabschnitt
- 35: Längsverzahnung
- 36: Nut
- 37: zentrale Bohrung
- 38: Nabe
- 39: Langloch
- 40: Arretierkugel
- 41: Hülse
- 42: Mitnehmerabschnitt
- 43: Feder
- 44: Halteplatte
- 45: zentrale Bohrung
- 46: erster Anschlag
- 47: zweiter Anschlag
- 48: erstes Kupplungselement
- 49: erste Mitnehmerklauen
- 50: Befestigungsschraube
- 51: Wälzlager
- 52: erste Stirnfläche
- 53: zweite Stirnfläche
- 54: Zentrierhülse
- 55: zweite Zentrierfläche
- 56: erste Zentrierfläche
- 57: Bolzen
- 58: Riegelfläche
- 59: Schwenklager
- 60: Haltearm
- D1: erste Drehachse
- D2: zweite Drehachse
- S1: erste Schwenkachse
- S2: zweite Schwenkachse
- S3: dritte Schwenkachse
- S4: vertikale Schwenkachse
- S5: horizontale Schwenkachse

## Patentansprüche

1. Vorrichtung zum Kuppeln einer Gelenkwelle mit einer Zapfwelle (1) eines Traktors umfassend
erste Kuppelmittel (48), die drehfest an der Gelenkwelle angeordnet sind, zweite Kuppelmittel (17), die drehfest an der Zapfwelle (1) des Traktors angeordnet sind und die zur Drehmomentübertragung drehfest mit den ersten Kuppelmitteln (48) kuppelbar sind,
ein Kuppelschild (7) zum Kuppeln der Kuppelmittel (17, 48), an dem die ersten Kuppelmittel (48) zumindest mittelbar drehgelagert sind und das Verriegelungsmittel mit Riegelflächen (58, 58') aufweist, und
eine Konsole (2), die am Heck des Traktors befestigbar ist und die mindestens eine Verriegelungseinrichtung mit Kipphebeln (5, 5') aufweist,
wobei die Kipphebel (5, 5') zwischen einer Entriegelungsposition und einer Verriegelungsposition schwenkbar sind,
**dadurch gekennzeichnet,**
**dass** die Verriegelungsmittel und die Verriegelungseinrichtung derart zusammenwirkend gestaltet sind, dass durch Schwenken der Kipphebel (5, 5') von der Entriegelungsposition in die Verriegelungsposition die Kipphebel (5, 5') die Riegelflächen (58, 58') hintergreifen, um das Kuppelschild (7) an die Konsole (2) heranzuziehen und die ersten Kuppelmittel (48) in eine Kuppelposition zum Kuppeln mit den zweiten Kuppelmitteln (17) zu überführen.

2. Vorrichtung nach Anspruch 1,
**dadurch gekennzeichnet,**
**dass** die ersten Kuppelmittel durch ein erstes Kupplungselement (48) dargestellt sind, das drehfest mit der Gelenkwelle verbindbar ist, und
**dass** die zweiten Kuppelmittel durch ein zweites Kupplungselement (17) dargestellt sind, das drehfest mit der Zapfwelle (1) des Traktors verbindbar ist.

3. Vorrichtung nach einem der Ansprüche 1 oder 2,
**dadurch gekennzeichnet,**
**dass** die Verriegelungsmittel zwei seitlich von dem Kuppelschild vorstehende Bolzen (57, 57') umfassen.

4. Vorrichtung nach einem der Ansprüche 1 bis 3,
**dadurch gekennzeichnet,**
**dass** die Kipphebel (5, 5') in ihrer Verriegelungsposition mechanisch verriegelbar sind.

5. Vorrichtung nach Anspruch 4,
**dadurch gekennzeichnet,**
**dass** an mindestens einem Kipphebel (5, 5') ein Haltearm (27, 27') vorgesehen ist, der zwischen einer Halteposition und einer Freigabeposition schwenkbar ist und in der Halteposition mit einer ersten Haltefläche (26, 26') den Kipphebel (5, 5') in seiner Verriegelungsposition hintergreift und in der Verriegelungsposition hält.

6. Vorrichtung nach einem der Ansprüche 1 bis 5,
**dadurch gekennzeichnet,**
**dass** das Kuppelschild (7) erste Zentriermittel (8, 8', 9, 9') aufweist, die mit zweiten Zentriermitteln (12, 12', 13, 13') der Konsole (2) beim Heranbewegen des Kuppelschildes (7) an die Konsole (2) derart zusammenwirken, dass eine erste Drehachse (D1) der ersten Kuppelmittel (48) mit einer zweiten Drehachse (D2) der zweiten Kuppelmittel (17) zentriert wird.

7. Vorrichtung nach Anspruch 6,
**dadurch gekennzeichnet,**
**dass** die ersten Zentriermittel erste Führungsflächen (8, 8', 9, 9') und die zweiten Zentriermittel zweite Führungsflächen (12, 12', 13, 13') umfassen.

8. Vorrichtung nach Anspruch 7,
**dadurch gekennzeichnet,**
**dass** die ersten Führungsflächen (8, 8', 9, 9') durch Bereiche einer Außenumfangsfläche des Kuppelschildes und die zweiten Führungsflächen (12, 12', 13, 13') durch axial von der Konsole (2) vorstehende Führungsarme (10, 10', 11, 11') gebildet sind.

9. Vorrichtung nach Anspruch 8,
**dadurch gekennzeichnet,**
**dass** vier sich jeweils paarweise gegenüberstehende Führungsarme (10, 10', 11, 11') vorgesehen sind, die um die zweite Drehachse (D2) verteilt angeordnet sind, und
**dass** der Abstand im rechten Winkel zur zweiten Drehachse (D2) zwischen den zweiten Führungsflächen (12, 12', 13, 13') zweier gegenüberstehender Führungsarme (10, 10', 11, 11') in Richtung zu freien Enden der Führungsarme (10, 10', 11, 11') zunimmt.

10. Vorrichtung nach einem der Ansprüche 6 bis 9,
**dadurch gekennzeichnet,**
**dass** die ersten Zentriermittel eine zentrische zur ersten Drehachse (D1) angeordnete erste Zentrierfläche (56) und die zweiten Zentriermittel eine zentrische zur zweiten Drehachse (D2) angeordnete zweite Zentrierfläche (55) aufweisen, wobei eine der Zentrierflächen als Außenumfangsfläche und die andere der Zentrierflächen als Innenumfangsfläche ausgebildet ist und wobei zumindest eine der Zentrierflächen (55, 56) konusförmig gestaltet ist.

11. Vorrichtung nach Anspruch 10,
**dadurch gekennzeichnet,**
**dass** die erste Zentrierfläche (56) durch eine Außenfläche der ersten Kuppelmittel (48) und die zweite Zentrierfläche (55) durch eine konusförmiger Innenfläche einer Zentrierhülse (54) an den zweiten Kuppelmitteln. (17) gebildet ist.

12. Vorrichtung nach einem der Ansprüche 1 bis 11,
**dadurch gekennzeichnet,**
**dass** die ersten Kuppelmittel (48) axial vorstehende erste Mitnehmerklauen (49) und die zweiten Kuppelmittel (17) axial vorstehende zweite Mitnehmerklauen (18) aufweisen, und
**dass** die Mitnehmerklauen (18, 49) in einem gekuppelten Zustand der beiden Kuppelmittel (17, 48) jeweils in Lücken zwischen den Mitnehmerklauen (18, 49) des anderen Kupplungselements (17, 48) eingreifen.

13. Vorrichtung nach einem der Ansprüche 1 bis 12,
**dadurch gekennzeichnet,**
**dass** eines der Kuppelmittel (17) axial zwischen einer in Richtung zu den anderen Kuppelmitteln (48) vorgeschobenen und einer zurückgeschobenen Stellung verschiebbar sind und
**dass** Federmittel (43) vorgesehen sind, die die axial verschiebbaren Kuppelmittel (17) in Richtung zur vorgeschobenen Stellung mit Kraft beaufschlagen.

14. Vorrichtung nach Anspruch 13,
**dadurch gekennzeichnet,**
**dass** die zweiten Kuppelmittel (17) gegenüber der Zapfwelle (1) axial verschiebbar geführt sind.

## Claims

1. Device for coupling a propeller shaft to a power take-off shaft (1) of a tractor comprising
first coupling means (48), which are arranged rotationally fast on the propeller shaft,
second coupling means (17), which are arranged rotationally fast on the power take-off shaft (1) of the tractor and which can be coupled for the torque transmission rotationally fast to the first coupling means (48),
a coupling plate (7) for coupling the coupling means (17, 48), on which the first coupling means (48) are at least indirectly rotationally supported and which have locking means with locking faces (58, 58'), and
a bracket (2), which is attachable on the rear of the tractor and which has the at least one locking device with rocker levers (5, 5'),
wherein the rocker levers (5, 5') are pivotable between a release position and a locking position,
**characterised in**
**that** the locking means and the locking device are formed interacting with each other such, that by means of pivoting the rocker levers (5, 5') from the release position to the locking position, the rocker levers (5, 5') engage behind the locking faces (58, 58') to pull the coupling plate (7) towards the bracket (2) and to move the first coupling means (48) into a coupling position for coupling to the second coupling means (17).

2. Device according to claim 1,
**characterised in**
**that** the first coupling means are represented by a first coupling member (48), which is connectable rotationally fast to the propeller shaft, and
**that** the second coupling means are represented by a second coupling member (17), which is connectable rotationally fast to the power take-off shaft (1) of the tractor.

3. Device according to one of claims 1 or 2,
**characterised in**
**that** the locking means comprise two pins (57, 57') projecting laterally from the coupling plate.

4. Device according to one of claims 1 to 3,
**characterised in**
**that** the rocker levers (5, 5') are mechanically lockable in their locking position.

5. Device according to claim 4,
**characterised in**
**that** on at least one rocker lever (5, 5') a holding arm (27, 27') is provided, which is pivotable between a holding position and a releasing position and which in the holding position engages with a first holding face (26, 26') behind the rocker lever (5, 5') in its locking position and which retains it in the locking position.

6. Device according to one of claims 1 to 5,
**characterised in**
**that** the coupling plate (7) has first centring means (8, 8', 9, 9'), which interact with second centring means (12, 12', 13, 13') of the bracket (2), when moving the coupling plate (7) towards the bracket (2), in such a way, that a first axis of rotation (D1) of the first coupling means (48) is aligned with a second axis of rotation (D2) of the second coupling means (17).

7. Device according to claim 6,
**characterised in**
**that** the first centring means comprise first guide faces (8, 8', 9, 9') and the second centring means comprise second guide faces (12, 12', 13, 13').

8. Device according to claim 7,
**characterised in**
**that** the first guide faces (8, 8', 9, 9') are formed by portions of an outer circumferential face of the coupling plate and the second guide faces (12, 12', 13, 13') are formed by guide arms (10, 10', 11, 11'), projecting from the bracket (2).

9. Device according to claim 8,
**characterised in**
**that** four guide arms (10, 10', 11, 11'), opposing each other in pairs, are provided, which are arranged in a distributed manner around the second axis of rotation (D2), and
**that** the distance at right angle to the second axis of rotation (D2) between the second guide faces (12, 12', 13, 13') of two opposed guide arms (10, 10', 11, 11') increases in direction towards the free ends of the guide arms (10, 10', 11, 11').

10. Device according to one of claims 6 to 9,
**characterised in**
**that** the first centring means have a first centring face (56), arranged centrically to the first axis of rotation (D1) and the second centring means have a second centring face (55) arranged centrically to the second axis of rotation (D2), wherein one of the centring faces is formed as an outer circumferential face and the other of the centring faces is formed as an inner circumferential face and wherein at least one of the centring faces (55, 56) is formed conically.

11. Device according to claim 10,
**characterised in**
**that** the first centring face (56) is formed by an outer face of the first coupling means (48) and the second centring face (55) is formed by a conical inner face of a centring sleeve (54) on the second coupling means (17).

12. Device according to one of claims 1 to 11,
**characterised in**
**that** the first coupling means (48) have axially projecting first driving claws (18), and that the second coupling means (17) have axially projecting second driving claws (18),
**that** the driving claws (18, 49) engage in a coupled condition of the two coupling means (17, 48) respectively in gaps between the driving claws (18, 49) of the other coupling means (17, 48).

13. Device according to one of claims 1 to 12,
**characterised in**
**that** one of the coupling means (17) is displaceable between a position pushed forward in direction towards the other coupling means (48) and a retracted position and
**that** spring means (43) are provided, which urge with a force the axially displaceable coupling means (17) in direction towards the pushed-forward position.

14. Device according to claim 13,
**characterised in**
**that** the second coupling means (17) are guided axially displaceably relative to the power take-off shaft.

## Revendications

1. Dispositif pour le couplage d'un arbre de transmission avec une prise de force (1) d'un tracteur comprenant
des premiers moyens de couplage (48), qui sont disposés de façon solidaire en rotation sur l'arbre de transmission,
des seconds moyens de couplage (17), qui sont disposés de façon solidaire en rotation sur l'arbre de force (1) du tracteur et qui peuvent être couplés de façon solidaire en rotation avec les premiers moyens de couplage (48) pour la transmission du couple,
une plaque de couplage (7) pour le couplage des moyens de couplage (17, 48), sur lesquels les premiers moyens de couplage (48) sont fixés au moins indirectement par rotation et qui présente des moyens de liaison avec des surfaces de verrou (58, 58'), et
une console (2), qui peut être fixée sur l'arrière du tracteur et qui présente au moins un dispositif de verrouillage avec des leviers basculants (5, 5'),
les moyens basculants (5, 5') pouvant être basculés entre une position de déverrouillage et une position de verrouillage,
**caractérisé en ce que**
les moyens de verrouillage et le dispositif de verrouillage sont conçus de façon coopérante de telle sorte que, par le basculement des leviers basculants (5, 5') de la position de déverrouillage à la position de verrouillage, les leviers basculants (5, 5') saisissent par l'arrière les surfaces de verrou (58, 58'), afin de rapprocher la plaque de couplage (7) de la console (2) et de transférer les premiers moyens de couplage (48) dans une position de couplage pour le couplage avec les seconds moyens de couplage (17).

2. Dispositif selon la revendication 1,
**caractérisé en ce que**
les premiers moyens de couplage sont représentés par un premier élément de couplage (48), qui peut être relié de façon solidaire en rotation avec l'arbre de transmission, et
**en ce que** les seconds moyens de couplage sont représentés par un second élément de couplage (17), lequel peut être relié de façon solidaire en rotation avec la prise de force (1) du tracteur.

3. Dispositif selon l'une quelconque des revendications 1 ou 2,
**caractérisé en ce que**
les moyens de verrouillage comprennent deux boulons (57, 57') dépassant latéralement de la plaque de couplage.

4. Dispositif selon l'une quelconque des revendications 1 à 3,
**caractérisé en ce que**
les leviers basculants (5, 5') peuvent être déverrouillés mécaniquement dans leur position de verrouillage.

5. Dispositif selon la revendication 4,
**caractérisé en ce que**
un bras de retenue (27, 27') est prévu sur au moins un levier basculant (5, 5'), lequel bras peut être basculé entre une position de retenue et une position de libération et saisit par l'arrière le levier basculant (5, 5') dans sa position de retenue avec une première surface de retenue (26, 26') et maintient le levier dans la position de verrouillage.

6. Dispositif selon l'une quelconque des revendications 1 à 5,
**caractérisé en ce que**
la plaque de couplage (7) présente des premiers moyens de centrage (8, 8', 9, 9'), qui coopèrent avec des seconds moyens de centrage (12, 12', 13, 13') de la console (2) lors du mouvement de rapprochement de la plaque de couplage (7) de la console (2), de sorte qu'un premier axe de rotation (D1) des premiers moyens de couplage (48) est centré avec un second axe de rotation (D2) des seconds moyens de couplage (17).

7. Dispositif selon la revendication 6,
**caractérisé en ce que**
les premiers moyens de centrage comprennent les premières surfaces de guidage (8, 8', 9, 9') et les seconds moyens de centrage des secondes surfaces de guidage (12, 12', 13, 13').

8. Dispositif selon la revendication 7,
**caractérisé en ce que**
les premières surfaces de guidage (8, 8', 9, 9') sont formées par des zones d'une surface périphérique extérieure de la plaque de couplage et les secondes surfaces de guidage (12, 12', 13, 13') par des bras de guidage (10, 10', 11, 11') dépassant de la console (2).

9. Dispositif selon la revendication 8,
**caractérisé en ce que**
quatre bras de guidage (10, 10', 11, 11') se faisant face réciproquement paires sont prévus, lesquels bras sont disposés de façon répartie autour du second axe de rotation (D2), et
**en ce que** la distance à angle par rapport au second axe de rotation (D2) entre les secondes surfaces de guidage (12, 12', 13, 13') de deux bras de guidage (10, 10', 11, 11') se faisant face augmente en direction d'extrémités libres des bras de guidage (10, 10', 11, 11').

10. Dispositif selon l'une quelconque des revendications 6 à 9,
**caractérisé en ce que**
les premiers moyens de centrage présentent une première surface de centrage (56) disposée de façon centrée par rapport au premier axe de rotation (D1) et les seconds moyens de centrage une seconde surface de centrage (55) disposée de façon centrée par rapport au second axe de rotation (D2), l'une des surfaces de centrage étant conçue sous forme de surface périphérique extérieure et l'autre des surfaces de centrage sous forme de surface périphérique intérieure et au moins l'une des surfaces de centrage (55, 56) étant conçue sous forme de cône.

11. Dispositif selon la revendication 10,
**caractérisé en ce que**
la première surface de centrage (56) est formée par une surface extérieure des premiers moyens de couplage (48) et la seconde surface de centrage (55) par une surface intérieure en forme de cône d'un manchon de centrage (54) sur les seconds moyens de couplage (17).

12. Dispositif selon l'une quelconque des revendications 1 à 11,
**caractérisé en ce que**
les premiers moyens de couplage (48) présentent des premières griffes d'entraîneur (49) dépassant axialement et les seconds moyens de couplage (17) des secondes griffes d'entraîneur (18) dépassant axialement, et
**en ce que** les griffes d'entraîneur (18, 49) s'engagent, lorsque les deux moyens de couplage (17, 48) sont dans un état couplé, respectivement dans des interstices entre les griffes d'entraîneur (18, 49) de l'autre élément de couplage (17, 48).

13. Dispositif selon l'une quelconque des revendications 1 à 12,
**caractérisé en ce que**
l'un des moyens de couplage (17) peut être déplacé axialement entre une position avancée en direction des autres moyens de couplage (48) et une position reculée et
**en ce que** des moyens de ressort (43) sont prévus, lesquels sollicitent avec de la force les moyens de couplage (17) coulissant axialement en direction de la position avancée.

14. Dispositif selon la revendication 13,
**caractérisé en ce que**
les seconds moyens de couplage (17) sont guidés de façon à pouvoir coulisser axialement par rapport à l'arbre de force (1).
